# EUROPÄISCHE PATENTANMELDUNG

(11) **EP 2 289 784 A1**
(43) Veröffentlichungstag der Anmeldung: **02.03.2011**
(21) Anmeldenummer: 10153421.2
(22) Anmeldetag: 12.02.2010
(51) Int. Cl.: B62J 11/00, B62H 5/00, E05B 71/00

(54) **Halter und Fahrradschloss**

(30) Priorität: 31.08.2009 DE 102009043906
(71) Anmelder: Trelock GmbH, 48163 Münster (DE)
(72) Erfinder: Kortenbrede, Ludger, 48291 Telgte (DE); Wissmann, Andreas, 48346 Ostbevern (DE)
(74) Vertreter: Hentrich, Swen

(57) **Zusammenfassung**

Halter (1) und Schloss (2) mit einem Schlossgehäuse (20), wobei der Halter (1) einen biegsamen Haltermittelabschnitt (12) und einen Halterbefestigungsabschnitt (13) umfasst, der eine Anzahl an Befestigungsöffnungen (14) aufweist, die zur Befestigung an einem sich an dem Schlossgehäuse (20) befindenden Vorsprung (24) ausgestaltet und angeordnet sind, und wobei das Schlossgehäuse (20) eine Rohranlagefläche (23) und einen Vorsprung (24) aufweist, der zur Befestigung des Halters (1) mittels von auf dem Halter (1) angebrachten Befestigungsöffnungen (14) ausgestaltet und angeordnet ist.

## Beschreibung

Die vorliegende Erfindung bezieht sich auf einen Halter und ein Fahrradschloss und insbesondere bezieht sie sich auf einen flexiblen Halter mit einem Fahrradschloss.

Bei herkömmlichen Haltern für Fahrradschlösser tritt das Problem auf, dass diese Halter mit dem Fahrrad fest verbunden sind. Wenn ein derartiger Halter an einem anderen Fahrrad verwendet werden soll, müssen Werkzeuge benützt werden, um den Halter vom Fahrrad zu lösen. Dessen ungeachtet können die vorbekannten Halter von unbefugten Personen entfernt werden.

Die Aufgabe der vorliegenden Erfindung liegt demzufolge darin, die oben genannten Nachteile herkömmlicher Halter und Fahrradschlösser zu überwinden und deren Handhabung zu vereinfachen.

Diese Aufgabe wird bei einem Halter und einen Schloss mit einem Schlossgehäuse, dadurch gelöst, dass der Halter einen biegsamen Haltermittelabschnitt, und einen Halterbefestigungsabschnitt umfasst, der eine Anzahl an Befestigungsöffnungen aufweist, die zur Befestigung an einem sich an dem Schlossgehäuses befindenden Vorsprung ausgestaltet und angeordnet sind, und dass das Schlossgehäuse eine Rohranlagefläche und einen Vorsprung aufweist, der zur Befestigung des Halters mittels von auf dem Halter angebrachten Befestigungsöffnungen ausgestaltet und angeordnet ist. Dadurch kann auf einfache Weise der Halter das Schloss an einem Fahrradrahmen für den Transport sicher befestigen.

Weiterhin kann bei dem Halter der Haltermittelabschnitt eine längsseitige Haltermittelabschnittsöffnung aufweisen. Aufgrund der längsseitigen Haltermittelabschnittsöffnung weist der biegsame Haltermittelabschnitt zwei voneinander entfernt angeordnete Schenkel auf. Aufgrund der verbreiterten Auflage erhöht dies die Sicherheit der Halterung beim Transport mit einem verringerten Materialaufwand. Weiterhin kann die längsseitige Haltermittelabschnittsöffnung dazu genutzt werden, den Halter an dem Schloss anzuschließen, indem ein Schlosskabel durch diese längsseitige Haltermittelabschnittsöffnung geführt wird.

Bevorzugt weisen die Befestigungsöffnungen und die längsseitige Haltermittelabschnittsöffnung eine Randverstärkung auf, um die Belastbarkeit und die Lebensdauer des Halters zu erhöhen.

Zusätzlich kann bei dem Halter der Haltermittelabschnitt mit einer größeren Breite als der Halterbefestigungsabschnitt ausgestaltet sein, wodurch die Sicherheit beim Transport erhöht wird.

Weiterhin können bei dem Halter der Haltermittelabschnitt und der Halterbefestigungsabschnitt über die Länge unterschiedliche Querschnittsflächen aufweisen. Auf diese Weise ist der Halter im Querschnitt über seine Länge so ausgeführt, dass das Dehnverhalten über die Länge gleichmäßig ist. Bevorzugt wird für den Halter ein flexibles Material gewählt, wodurch es mit der Auslegung der Länge des Halters möglich wird, den Halter an unterschiedlichen Rohren, wie z. B. an Rohren mit kleinen oder großen Rohrdurchmessern, an zylindrischen, rechteckigen, ovalen, tropfenförmigen Rohren oder Rohren mit anderen Querschnittsvarianten zu befestigen.

Darüber hinaus kann der Halter einen Halterhalteabschnitt mit einem Abschlussstück aufweisen, das zur Anlage an ein Bogenstück des Schlossgehäuses ausgestaltet ist, wobei der Vorsprung auf einer der Halteranlagefläche und dem Bogenstück gegenüber liegenden Seite des Schlossgehäuses angeordnet ist. Ein Vorteil dieser Ausgestaltung liegt darin, dass der Halter einfach abgenommen und/oder vom Schloss getrennt werden kann, wenn der Nutzer das Fahrrad abschließt und sich entfernt. Mit dieser Ausgestaltung ist es auch möglich, die Halter nach dem Einsatzzweck gezielt auszuwählen, wenn das Schloss z. B. für verschiedene Fahrräder verwendet werden soll.

Dabei hat es sich als günstig erwiesen, wenn der Haltermittelabschnitt und der Halterbefestigungsabschnitt zur Durchführung durch eine zwischen dem Bogenstück und einer Halteranlagefläche des Schlossgehäuses ausgebildete Durchführungsöffnung ausgestaltet sind. Dadurch, dass der Halter durch eine Durchführungsöffnung geführt werden kann, ist die Sicherheit beim Transport erhöht, wobei die einfache Trennbarkeit vom Schloss erhalten bleibt.

Alternativ kann der Halter mit dem Schlosses einstückig ausgebildet sein, wodurch die Herstellung des Schlosses vereinfacht ist. Vorzugsweise bildet ein Abschnitt dieses mit Schloss einstückig ausgebildeten Halters eine Mantelfläche des Schlossgehäuses.

Nach einem anderen Ausführungsbeispiel ist der Halter zu einer gelenkigen Verbindung mit dem Schloss, insbesondere zu einer Scharnierverbindung mit einem Stift und mit mindestens einer Halterbuchse ausgestaltet, wobei das Schlossgehäuse mindestens eine Aufnahme für den Stift aufweist. Ein Vorteil dieser Ausgestaltung mit der gelenkigen Verbindung liegt darin, dass der Halter besser an Rohre mit großen Durchmessern angepasst werden kann.

Des Weiteren kann das Schlossgehäuse eine Lagerbuchsenaufnahme zur Aufnahme der mindestens einen Lagerbuchse aufweisen, wodurch die gelenkige Verbindung verbessert wird.

Als günstig hat es sich erwiesen, wenn der Halter zwei Lagerbuchsen für den Stift aufweist und wenn das Schlossgehäuse drei Aufnahmen für den Stift aufweist, wobei entweder a) jede der drei Aufnahmen für die Durchführung des Stiftes durch die Aufnahmen geöffnet ausgestaltet ist oder b) die endseitigen Aufnahmen nach außen zum Einclipsen des Stiftes geschlossen ausgestaltet sind. Ein Vorteil der ersten Ausgestaltung liegt darin, dass mit dem Einführen des Stiftes die gelenkige Verbindung einfach hergestellt werden kann, während ein Vorteil der zweiten Ausgestaltung darin liegt, dass durch das Einclipsen und die an den Enden geschlossene Ausgestaltung der Aufnahmen die Stabilität der gelenkigen Verbindung erhöht werden kann.

Des Weiteren kann zur Bildung der gelenkigen Verbindung zwischen dem Halter und dem Schloss der Halter und das Schlossgehäuse mit einem Zwei-Komponenten-Spritzgießverfahren hergestellt worden sind, wodurch eine besonders gute Verbindung zwischen dem Halter und dem Schloss bewirkt wird.

Als günstig hat es sich erwiesen, wenn das Schlossgehäuse ein Bogenstück, eine Halteranlagefläche und eine zwischen dem Bogenstück und der Halteranlagefläche ausgebildete Durchführungsöffnung aufweist, wobei der Vorsprung auf einer der Halteranlagefläche und dem Bogenstück gegenüber liegenden Seite des Schlossgehäuses angeordnet ist. Aufgrund der Trennung von Halter und Schloss ist es möglich, entsprechend ausgestaltete Halter in Abhängigkeit vom gewünschten Einsatzzweck gezielt auszuwählen.

Bevorzugt ist bei dem Schloss an der Rohranlagefläche eine Anzahl an in Längsrichtung angeordneten Stegen angebracht, um die Halterung am Fahrrad zu verbessern. Zusätzlich kann die Halterung weiter verbessert werden, wenn die Rohranlagefläche aus einem elastischen Material gebildet ist. Auf diese Weise ist es möglich, die Rohranlagefläche besser an ein Rahmenrohr des Fahrrades anzupassen.

Besonders bevorzugt ist die Rohranlagefläche von dem Schlossgehäuse abnehmbar ausgestaltet, so dass für unterschiedliche Fahrradrahmen entsprechend angepasste Rohranlageflächen gezielt ausgewählt und verwendet werden können.

Im Folgenden wird die Erfindung an in den Zeichnungen dargestellten Ausführungsbeispielen näher erläutert; es zeigen:
- Fig. 1: eine schematische Darstellung eines Halters und eines Schlosses mit einem Schlossgehäuse nach einem ersten Ausführungsbeispiel, bei dem Halter und Schloss voneinander getrennt ausgeführt sind,
- Fig. 2: eine schematische Darstellung des in Fig. 1 gezeigten Ausführungsbeispiels, bei dem sich der Halter in einer Durch- führung durch eine Durchführungsöffnung des Schlossgehäuses befindet,
- Fig. 3: eine schematische Darstellung des in Fig. 1 gezeigten Ausführungsbeispiels, bei dem der Halter durch die Durch- führungsöffnung durchgeführt und mit dem Abschlussstück an einem Bogenstück des Schlossgehäuses verankert ist,
- Fig. 4: eine schematische Darstellung des Halters und des Schlosses mit der Befestigung an einem Rahmenrohr eines Fahrrades,
- Fig. 5: eine schematische Darstellung eines Halters und eines Schlosses mit einem Schlossgehäuse nach einem zweiten Ausführungsbeispiel, bei dem der Halter und das Schloss über eine Scharniervorrichtung miteinander gelenkig verbunden sind,
- Fig. 6: eine schematische Darstellung eines Halters und eines Schlosses mit einem Schlossgehäuse nach einem dritten Ausführungsbeispiel, bei dem der Halter und eine Mantelfläche des Schlossgehäuses einstückig ausgebildet sind, und
- Fig. 7: eine schematische Darstellung eines Schlosses mit einem Schlossgehäuse nach einem vierten Ausführungsbeispiel, bei dem die Rohranlagefläche von dem Schlossgehäuse abnehmbar ausgestaltet ist.

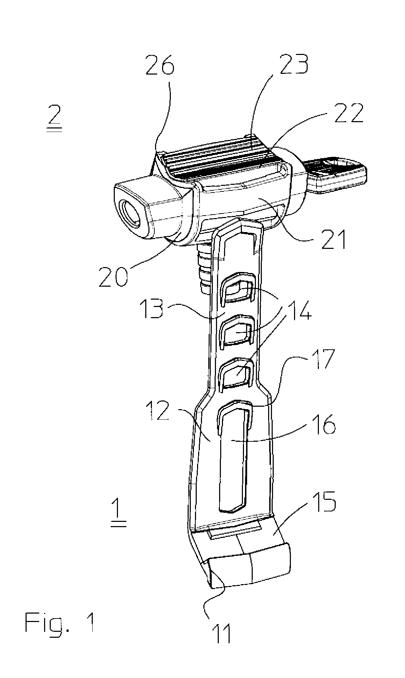

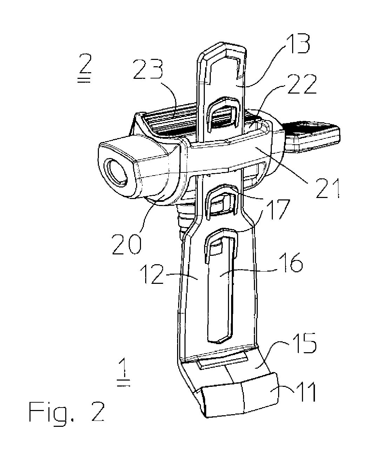

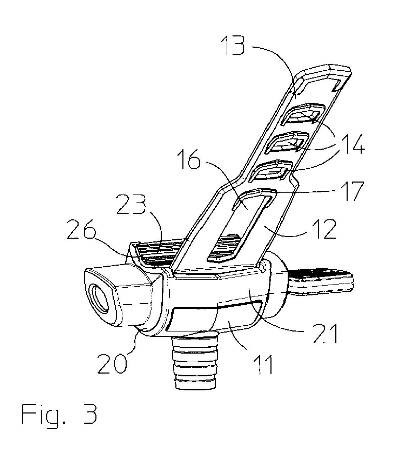

Figuren 1 bis 3 zeigen schematische Darstellungen eines Halters 1 und eines Schlosses 2 mit einem Schlossgehäuse 20 nach einem ersten Ausführungsbeispiel der vorliegenden Erfindung, aus denen die Durchführung des Halters 1 durch eine Durchführungsöffnung des Schlossgehäuses 20 und die Befestigung des Halters 1 an einem Bogenstück 21 des Schlossgehäuses 20 über ein Abschlussstück 11 ersichtlich sind.

Bei dem ersten Ausführungsbeispiel umfasst der Halter 1 das Abschlussstück 11, einen Halterhalteabschnitt 15, einen flexiblen Haltermittelabschnitt 12 und einen Halterbefestigungsabschnitt 13. Das Abschlussstück 11 ist zur Anlage an das Bogenstück 21 des Schlossgehäuses 20 so ausgestaltet, dass es nicht durch die Durchführungsöffnung des Schlossgehäuses 20 durchgeführt werden kann, sondern die Bewegung des Halters 1 in diese Richtung begrenzt, während der Haltermittelabschnitt 12 und der Halterbefestigungsabschnitt 13 zur Durchführung durch die zwischen dem Bogenstück 21 und einer Halteranlagefläche 22 des Schlossgehäuses 20 ausgebildeten Durchführungsöffnung ausgestaltet sind. Vorzugsweise weist der Haltermittelabschnitt 12 eine längsseitige Haltermittelabschnittsöffnung 16 auf, so dass er mit zwei voneinander entfernt angeordneten Schenkeln ausgestaltet ist.

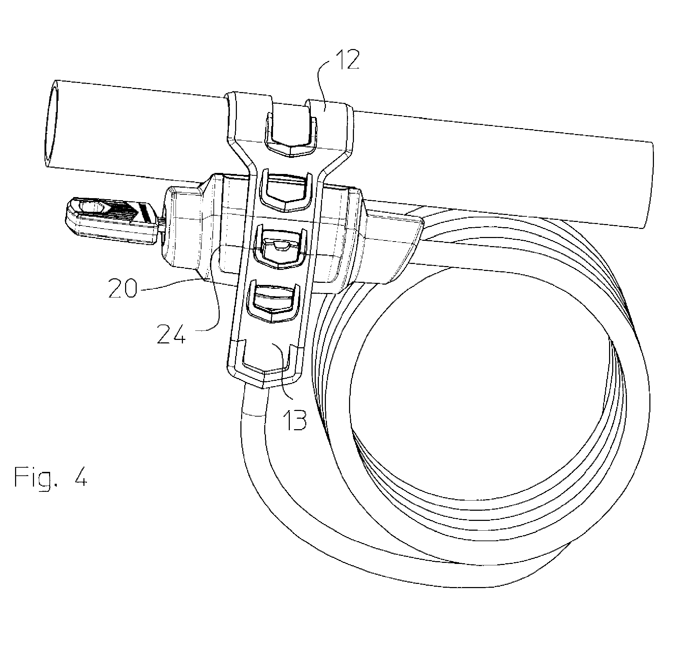

Weiterhin weist der Halterbefestigungsabschnitt 13 eine Anzahl an Befestigungsöffnungen 14 auf, die zur Befestigung an einem Vorsprung 24 des Schlossgehäuses 20 ausgestaltet sind, wie in der Fig. 4 dargestellt ist. Der Vorsprung 24 ist zur Befestigung an einer der Halteranlagefläche 22 und dem Bogenstück 21 gegenüber liegenden Seite des Schlossgehäuses 20 angeordnet. Darüber hinaus können die Befestigungsöffnungen 14 und die längsseitige Haltermittelabschnittsöffnung 16 eine Öffnungsrandverstärkung 17 aufweisen. Zusätzlich kann die Haltermittelabschnittsöffnung 16, wie die Befestigungsöffnungen 14, zur Befestigung an dem Vorsprung 24 ausgestaltet sein, um den Halter 1 besser an verschiedene Rohrdurchmesser anpassen zu können. Vorzugsweise sind drei Befestigungsöffnungen 14 in dem Halterbefestigungsabschnitt 13 angeordnet.

Zur besseren Anlage an ein Rohr eines Fahrradrahmens weist eine Rohranlagefläche 23 des Schlossgehäuses 20 eine entsprechende Krümmung auf, wobei in Längsrichtung angeordnete Stege 26 die Transportsicherheit erhöhen können. Eine Befestigung des Schlosses 2 mit dem Halter 1 an einem Rohr des Fahrradrahmens ist in der Fig. 4 gezeigt.

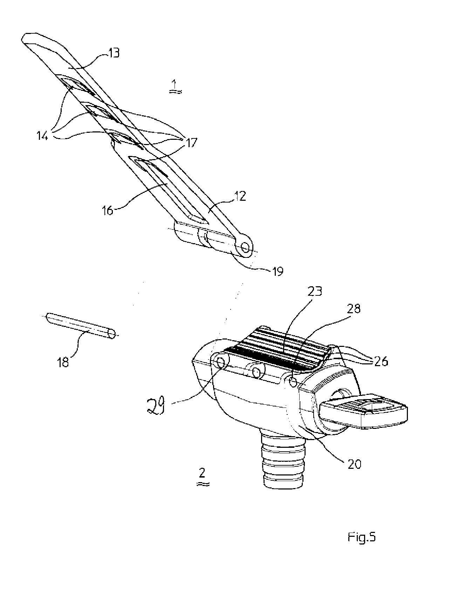

Fig. 5 zeigt eine schematische Darstellung eines Halters 1 und eines Schlosses 2 mit einem Schlossgehäuse 20 nach einem zweiten Ausführungsbeispiel, bei dem der Halter 1 und das Schloss 2 über eine Scharniervorrichtung miteinander gelenkig verbunden sind. Die Scharniervorrichtung umfasst einen Stift 18, Lagerbuchsen 19 für den Stift 18, die an dem Haltermittelabschnitt 12 angeordnet sind, und Aufnahmen 28 für den Stift 18, die an dem Schlossgehäuse 20 angeordnet sind. Bei dem in der Fig. 5 gezeigten Ausführungsbeispiel sind die Aufnahmen 28 zur Durchführung des Stiftes 18 geöffnet ausgestaltet. An dem Schlossgehäuse 20 ist eine Lagerbuchsenaufnahme 29 zur Aufnahme der Lagerbuchse 19 ausgebildet, wodurch die gelenkige Verbindung zwischen dem Halter 1 und dem Schloss 2 verbessert wird.

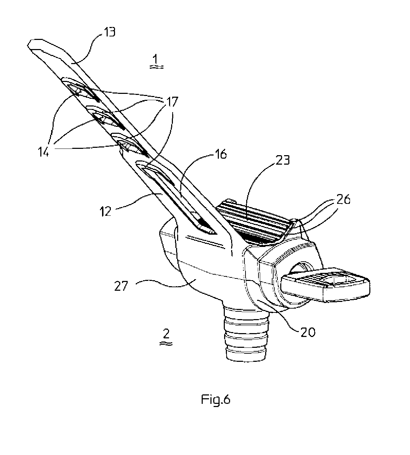

Fig. 6 zeigt eine schematische Darstellung eines Halters 1 und eines Schlosses 2 mit einem Schlossgehäuse 20 nach einem dritten Ausführungsbeispiel, bei dem der Halter 1 und eine Mantelfläche 27 des Schlosses 2 einstückig ausgebildet sind.

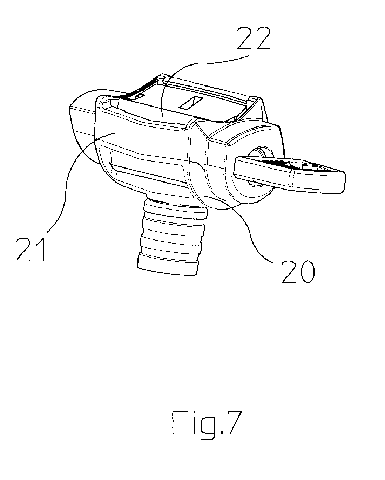

Fig. 7 zeigt eine schematische Darstellung eines Schlosses 2 mit einem Schlossgehäuse 20 nach einem vierten Ausführungsbeispiel, bei dem die Rohranlagefläche 23 derart ausgestaltet ist, dass sie von dem Schlossgehäuse 20 abgenommen werden kann.

Der erfindungsgemäße Halter kann für verschiedene Schlösser wie z. B. Kabelschlösser oder Drahtschlösser verwendet werden und ist nicht auf die in den Figuren darstellte Schlösser beschränkt.

### Bezugszeichenliste

- 1: Halter
- 2: Schloss
- 11: Abschlussstück
- 12: Haltermittelabschnitt
- 13: Halterbefestigungsabschnitt
- 14: Befestigungsöffnung
- 15: Halterhalteabschnitt
- 16: längsseitige Haltermittelabschnittsöffnung
- 17: Öffnungsrandverstärkung
- 18: Stift
- 19: Lagerbuchse
- 20: Schlossgehäuse
- 21: Bogenstück
- 22: Halteranlagefläche
- 23: Rohranlagefläche
- 24: Vorsprung
- 26: Steg
- 27: Mantelfläche des Schlosses
- 28: Aufnahmeöffnung
- 29: Lagerbuchsenaufnahme

## Patentansprüche

1. Halter (1) und Schloss (2) mit einem Schlossgehäuse (20), **dadurch gekennzeichnet, dass** der Halter (1) einen biegsamen Haltermittelabschnitt (12) und einen Halterbefestigungsabschnitt (13) umfasst, der eine Anzahl an Befestigungsöffnungen (14) aufweist, die zur Befestigung an einem sich an dem Schlossgehäuse (20) befindenden Vorsprung (24) ausgestaltet und angeordnet sind, und dass das Schlossgehäuse (20) eine Rohranlagefläche (23) und einen Vorsprung (24) aufweist, der zur Befestigung des Halters (1) mittels von auf dem Halter (1) angebrachten Befestigungsöffnungen (14) ausgestaltet und angeordnet ist.

2. Kombination eines Halters (1) und eines Schlosses (2) nach Anspruch 1, **dadurch gekennzeichnet, dass** der Haltermittelabschnitt (12) eine längsseitige Haltermittelabschnittsöffnung (16) aufweist.

3. Kombination nach Anspruch 1 oder 2, **dadurch gekennzeichnet, dass** die Befestigungsöffnungen (14) und die längsseitige Haltermittelabschnittsöffnung (16) eine Randverstärkung (17) aufweisen.

4. Kombination nach einem der Ansprüche 1 bis 3, **dadurch gekennzeichnet, dass** der Haltermittelabschnitt (12) mit einer größeren Breite als der Halterbefestigungsabschnitt (13) ausgestaltet ist und vorzugsweise dass über die Länge der Haltermittelabschnitt (12) und der Halterbefestigungsabschnitt (13) unterschiedliche Querschnittsflächen aufweisen.

5. Kombination nach einem der Ansprüche 1 bis 4, **dadurch gekennzeichnet, dass** der Halter (1) einen Halterhalteabschnitt (15) mit einem Abschlussstück (11) aufweist, das zur Anlage an ein Bogenstück (21) des Schlossgehäuses (20) ausgestaltet ist, und dass der Vorsprung (24) auf einer der Halteranlagefläche (22) und dem Bogenstück (21) gegenüber liegenden Seite des Schlossgehäuses (20) angeordnet ist.

6. Kombination nach Anspruch 5, **dadurch gekennzeichnet, dass** der Haltermittelabschnitt (12) und der Halterbefestigungsabschnitt (13) zur Durchführung durch eine zwischen dem Bogenstück (21) und einer Halteranlagefläche (22) des Schlossgehäuses (20) ausgebildete Durchführungsöffnung ausgestaltet sind.

7. Kombination nach Anspruch 5 oder 6, **dadurch gekennzeichnet, dass** das Schlossgehäuse (20) ein Bogenstück (21), eine Halteranlagefläche (22), und eine zwischen dem Bogenstück (21) und der Halteranlagefläche (22) ausgebildete Durchführungsöffnung aufweist, wobei der Vorsprung (24) auf einer der Halteranlagefläche (22) und dem Bogenstück (21) gegenüber liegenden Seite des Schlossgehäuses (20) angeordnet ist.

8. Kombination nach einem der Ansprüche 1 bis 4, **dadurch gekennzeichnet, dass** der Halter (1) mit dem Schlossgehäuse (20) einstückig ausgebildet ist und vorzugsweise so, dass der Halter (1) eine Mantelfläche (27) des Schlossgehäuses (20) bildet.

9. Kombination nach einem der Ansprüche 1 bis 4, **dadurch gekennzeichnet, dass** der Halter (1) zu einer gelenkigen Verbindung mit dem Schloss (2), insbesondere zu einer Scharnierverbindung mit einem Stift (18) und mindestens einer Lagerbuchse (19) für den Stift (18) ausgestaltet ist, wobei das Schlossgehäuse (20) mindestens eine Aufnahme (28) für den Stift (18) aufweist.

10. Kombination nach Anspruch 9, **dadurch gekennzeichnet, dass** das Schlossgehäuse (20) eine Lagerbuchsenaufnahme (29) zur Aufnahme der mindestens einen Lagerbuchse (19) aufweist.

11. Kombination nach Anspruch 9 oder 10, **dadurch gekennzeichnet, dass** der Halter (1) zwei Lagerbuchsen (19) für den Stift (18) aufweist und dass das Schlossgehäuse (20) drei Aufnahmen (28) für den Stift (18) aufweist, wobei entweder jede der drei Aufnahmen (28) für die Durchführung des Stiftes (18) durch die Aufnahmen (28) geöffnet ausgestaltet ist oder die endseitigen Aufnahmen (28) nach außen zum Einclipsen des Stiftes (18) geschlossen ausgestaltet sind.

12. Kombination nach einem der Ansprüche 9 bis 11, **dadurch gekennzeichnet, dass** zur Bildung der gelenkigen Verbindung zwischen dem Halter (1) und dem Schloss (2) der Halter (1) und das Schlossgehäuse (20) mit einem Zwei-Komponenten-Spritzgießverfahren hergestellt worden sind.

13. Kombination nach einem der Ansprüche 1 bis 12, **dadurch gekennzeichnet, dass** die Rohranlagefläche (23) aus einem elastischen Material gebildet ist.

14. Kombination nach einem der Ansprüche 1 bis 13, **dadurch gekennzeichnet, dass** an der Rohranlagefläche (23) eine Anzahl an in Längsrichtung angeordneten Stegen (26) angebracht ist.

15. Kombination nach einem der Ansprüche 1 bis 14, **dadurch gekennzeichnet, dass** die Rohranlagefläche (23) von dem Schlossgehäuse (20) abnehmbar ausgestaltet ist.
